Europäisches Patentamt

European Patent Office

Office européen des brevets

(19)

(11) Numéro de publication : **0 388 566 B1**

## (12) FASCICULE DE BREVET EUROPEEN

(45) Date de publication du fascicule du brevet :
**30.12.92 Bulletin 92/53**

(51) Int. Cl.⁵ : **G01P 3/44**

(21) Numéro de dépôt : **89403028.7**

(22) Date de dépôt : **03.11.89**

(54) **Butée à roulement équipée d'un capteur de champ magnétique.**

(30) Priorité : **24.03.89 US 328210**

(43) Date de publication de la demande :
**26.09.90 Bulletin 90/39**

(45) Mention de la délivrance du brevet :
**30.12.92 Bulletin 92/53**

(84) Etats contractants désignés :
**DE ES GB IT SE**

(56) Documents cités :
**FR-A- 2 623 260**
**US-A- 4 225 200**
**US-A- 4 688 951**
**US-A- 4 732 494**
**US-A- 4 783 180**

(73) Titulaire : **S.N.R. ROULEMENTS**
**Boîte Postale 17 1, rue des Usines**
**F-74010 Annecy Cédex (FR)**

(72) Inventeur : **Hilby, James A.**
**58 Taft Circle Road**
**Watertown, CT 06795 (US)**
Inventeur : **Santos, Alfred John**
**43 Cherrybrook Road**
**Canton Center, CT 06020 (US)**

(74) Mandataire : **Ernst-Schonberg, Michel**
**R.N.U.R. S. 0804 B.P. 103 8 & 10, avenue**
**Emile-Zola**
**F-92109 Boulogne Billancourt (FR)**

EP 0 388 566 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne une butée à roulement équipée d'un capteur de champ magnétique qui comporte une bague de butée tournante et une bague de butée fixe conforme au préambule de la revendication.

L'invention concerne plus particulièrement une butée à roulement qui possède un émetteur de champ magnétique et un capteur de champ magnétique pour déterminer la vitesse de rotation de la bague tournante par rapport à la bague opposée fixe.

La publication EP-A-0319355 décrit une butée à roulement équipée d'un capteur de champ magnétique situé dans un logement d'une plaque de butée à proximité d'une structure à pôles magnétiques alternés portée par une autre plaque de butée espacée axialement de la première plaque portant respectivement les chemins de roulement.

Cette butée exige des moyens de guidage spéciaux et des réglages précis de l'émetteur et du capteur lors du montage pour assurer un fonctionnement correct.

A titre d'exemple, les fabricants de transmissions pour véhicules ne prévoient qu'un espace axial réduit pour l'insertion et le fonctionnement d'une butée à roulement destinée à indiquer la vitesse en sortie de la transmission.

Il est manifestement très important de pouvoir réaliser des butées à roulements compactes, qui ne prennent que très peu de place, en particulier dans le sens axial, tout en assurant un fonctionnement correct et en n'exigeant qu'un réglage réduit ou nul de l'émetteur et du capteur de champ magnétique lors de l'installation, sans perdre leur capacité de guidage en cas de mouvement axial d'une bague de butée par rapport à l'autre.

La butée à roulement conforme aux caractéristiques de la revendication 1 occupe un minimum d'espace axial et radial.

D'autres caractéristiques et avantages de l'invention apparaîtront à la lecture de la description qui suit, faite en référence au dessin annexé, dans lequel :

la figure 1 représente une vue partielle de la sortie d'un mécanisme de transmission de véhicule automobile sur laquelle est montée la butée;

la figure 2 représente une vue en coupe d'une forme de réalisation à deux rebords de la présente invention, le plan de coupe passant par les deux rebords;

la figure 3 représente une vue de face des surfaces de la bague de la butée et du support du capteur tournées vers l'autre bague non représentée;

la figure 4 représente une vue des surfaces de la bague de butée et du support du capteur représenté à la figure 3;

la figure 5 représente une coupe partielle de la bague selon la ligne 5-5 de la figure 4;

la figure 6 représente une vue en perspective d'une seconde forme de réalisation de la bague de butée, selon laquelle le support du capteur est monté et guidé par un seul bord.

Les éléments communiqués qui sont représentés dans les différentes figures sont repérés par les mêmes références.

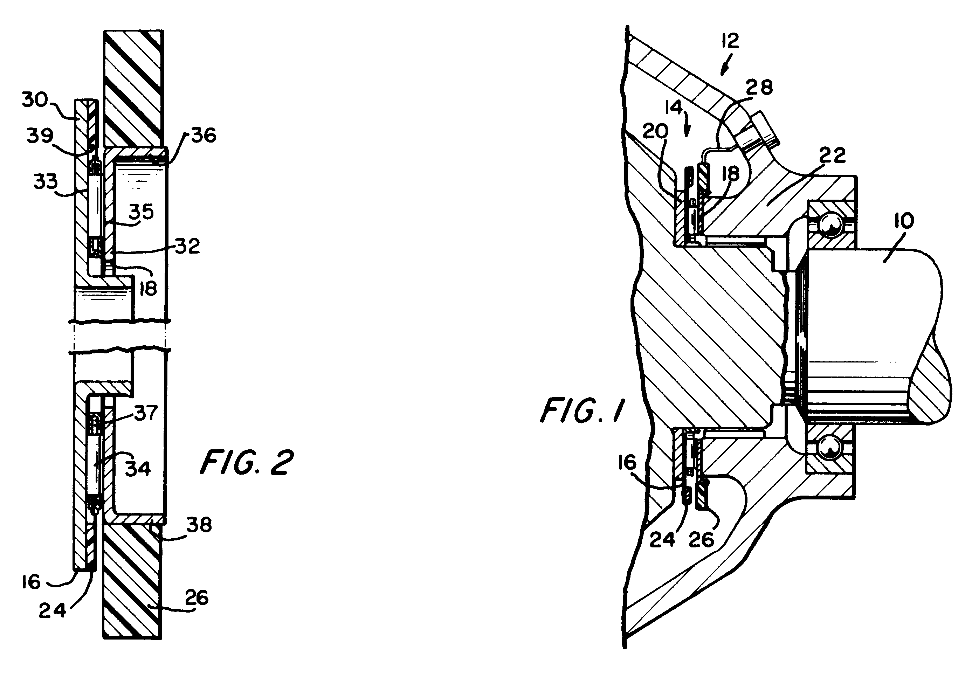

Selon la figure 1, un arbre tournant 10 est situé à l'intérieur du carter 12. Une butée axiale 14 à roulement comportant une première bague de butée 16 et une seconde bague de butée 18 est montée dans le carter, le dos de la bague de butée 16 en appui sur une cale 20 et le dos de la bague de butée 18 sont en butée sur la face d'appui 22. La bague de butée 16 tourne à la même vitesse que l'arbre 10. La bague de butée 18 est fixée à la face d'appui 22.

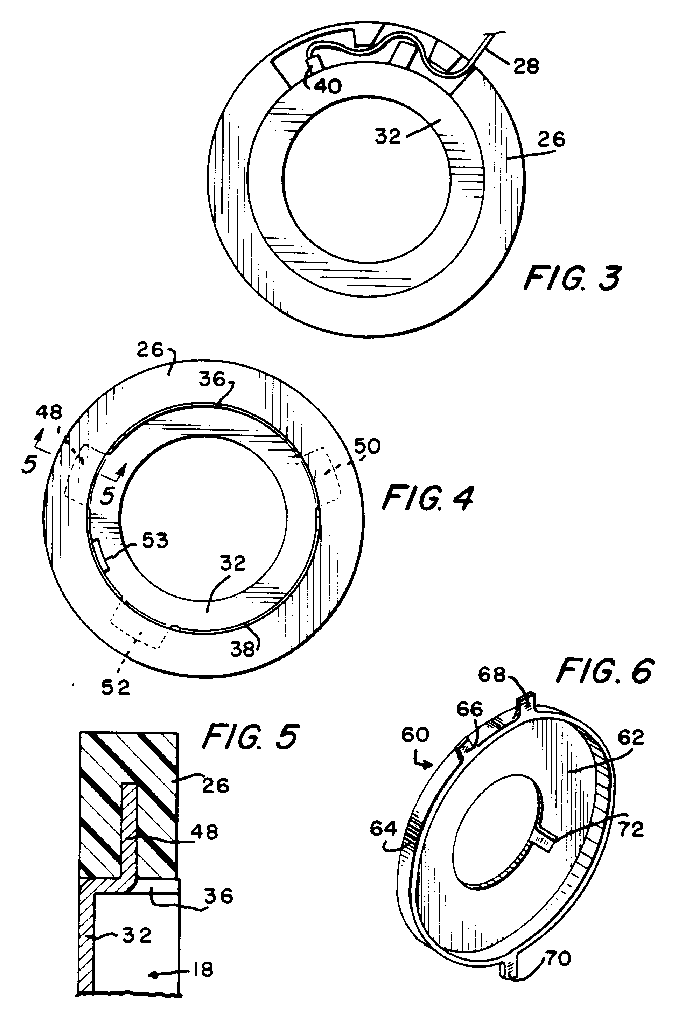

Un émetteur de champ magnétique annulaire 24 est monté sur la surface de la bague de butée 16 et fait face à la bague de butée 18. Un support de capteur 26 est monté sur la bague de butée 18. Un capteur 40 (voir figure 3), monté sur le support de capteur 26, détecte le nombre de fois où les pôles magnétiques nord et sud alternés de l'émetteur de champ magnétique 24 passent devant le capteur, indiquant ainsi la vitesse de rotation de l'arbre 10. Les signaux électriques du capteur sont acheminés par le conducteur 28.

Selon la figure 2, la bague de butée 16 comporte une extension radiale annulaire 30 destinée au montage de l'émetteur 24. La seconde bague de butée 18 comporte une extension radiale annulaire 32, séparée dans le sens axial de l'extension annulaire 30 de la première bague de butée 16. Les bagues de butée 16, 18 portent des chemins de roulement opposés 33,35 situés respectivement sur leurs parties annulaires 30 et 32.

Les corps roulants, tels que des rouleaux 34 dans la cage 37, roulent au contact des chemins 33,35. Le diamètre extérieur de la partie annulaire 30 de la bague 16 est nettement plus grand que le diamètre extérieur de la cage 37 pour que la surface intérieure radiale 39 de l'émetteur de champ magnétique annulaire 24 soit séparée radialement de la cage 37.

Dans le dispositif représenté sur les figures 2 à 5, une paire de rebords cylindriques séparés circonférentiellement 36 et 38 s'étendent axialement à la périphérie de la partie annulaire 32, en-dehors du plan de la première bague de butée 16 et coiffent la face de butée 22.

Le support 26 du capteur est porté par les rebords 36 et 38. Le support 26 du capteur est également guidé par les rebords 36 et 38, de manière à rester coaxial à la seconde bague de butée 18. Les rebords 36 et 38 ont pour fonction importante d'empêcher les mouvements radiaux relatifs du support du capteur par rapport à la seconde bague de butée.

Comme représenté sur la figure 3, un capteur de champ magnétique du type à effet Hall 40 est monté sur le support 26 du capteur, juste en face de l'émetteur de champ magnétique 24 fixé à la bague de butée 16.

Comme représenté sur les figures 4 et 5, la bague de butée 18 porte sur sa circonférence plusieurs languettes radiales séparées 48, 50 et 52, situées radialement à la périphérie de la partie annulaire 32 et pénétrant dans le support 26 du capteur.

Les languettes sont ajustées serrées dans le support 26 du capteur, pour empêcher la rotation de ce dernier par rapport à la bague de butée 18 et la séparation axiale du support 26 et de la bague de butée 18.

Le décalage angulaire des languettes 48 et 50 est en correspondance avec un angle au centre obtus. Le décalage des languettes 50 et 52 est en correspondance avec un angle au centre obtus et le décalage des languettes 52 et 48 est en correspondance avec un angle au centre aigu. Les languettes sont disposées pour que le montage du support 26 sur les rebords 36 et 38 assure au capteur 40 une position angulaire prédéterminée. En référence à la figure 1, la position prédéterminée du capteur permet au conducteur 28 de suivre le plus court chemin entre le capteur 40 et le carter 12, pour empêcher la rotation de la butée par rapport à la face d'appui 22.

La figure 6 représente une bague de butée 60 susceptible de remplacer la bague de butée 18 précitée. La bague de butée 60 possède une partie annulaire radiale 62. Un seul rebord cylindrique 64 s'étend dans le sens axial à la périphérie de la partie annulaire radiale 62, en-dehors du plan de la première bague de butée. Des languettes séparées 66, 68 et 70 dépassent radialement vers l'extérieur à l'extrémité axiale du rebord cylindrique 64. Le décalage angulaire des languettes 66 et 68 est en correspondance avec un angle aigu au centre, le décalage des languettes 66 et des languettes 68 et 70 est en correspondance avec des angles au centre obtus. Une languette anti-rotation 72 sur le diamètre intérieur de la partie annulaire 62 s'ajuste dans une rainure (non représentée), ménagée sur l'épaulement 22 (voir figure 1).

La butée à roulement telle que décrite n'exige aucun réglage du capteur par rapport à l'émetteur de champ magnétique. Par suite de la précision des rouleaux et des chemins de roulement, l'entrefer, entre l'émetteur de champ magnétique et le capteur, se situe dans la plage de fonctionnement du capteur à effet Hall. Le ou les rebords axiaux de la partie annulaire de la bague fixe remplissent un certain nombre de fonctions. Ils constituent un guide naturel du support de capteur et rendent inutile une surface de guidage distincte. Par ailleurs, ils positionnent le capteur radialement à l'extérieur du chemin de roulement, n'entraînant ainsi qu'une modification réduite ou nulle de l'épaisseur du roulement de butée, réduisant donc au minimum la longueur axiale de ce dernier. De plus, la largeur du ou des rebords 36, 38, 64 empêche tout mouvement radial de la bague 18 par rapport au support 26 du capteur.

Les languettes 48, 50, 52 ou 66, 68, 70 dépassant dans le sens radial vers l'extérieur, remplissent également un certain nombre de fonctions. Elles empêchent notamment le support 26 du capteur de tourner sur la bague 18 et interdisent la séparation axiale du support 26 de capteur de la bague.

En fonctionnement, lorsque l'arbre 10 tourne, la bague de butée 16 tourne à la même vitesse. Lorsque les pôles magnétiques nord et sud alternés de l'émetteur de champ magnétique 24 passent devant le capteur 40, ce dernier émet des impulsions, acheminées par le conducteur 28. La vitesse de l'arbre 10 est proportionnelle au nombre d'impulsions par unité de temps.

## Revendications

1. Butée à roulement équipée d'un capteur de champ magnétique, qui est constituée par une première et une deuxième bague (16, 18) comportant respectivement deux extensions radiales (30, 32) annulaires séparées l'une de l'autre, des chemins de roulement (33, 35) disposés en partie sur lesdites extensions radiales et séparés par des corps roulants (34) et un émetteur annulaire (24) de champ magnétique monté sur la surface de l'extension radiale (30) de la première bague de butée (16) et dans laquelle la deuxième bague (18) possède au moins un rebord (36, 38 ; 64) cylindrique axial situé à la périphérie de l'extension radiale (32) annulaire de ladite bague et en-dehors du plan de la première bague (18), un support (26) de capteur (40) porté et guidé par ledit rebord (36, 38 ; 64) et un capteur (40) monté sur ledit support axialement décalé et en face de l'émetteur 24 de champ magnétique porté par la première bague (16), la deuxième bague (18) porte au moins une languette (48, 50, 52 ; 66, 68, 70) radiale engagée dans le support (26) du capteur (40) pour empêcher la rotation dudit support par rapport à la bague.

2. Butée selon la revendication 1, caractérisée par le fait que les rebords (36, 38) de la deuxième bague (18) sont séparés angulairement et que les languettes (48, 50, 52 ; 66, 68, 70) sont inégalement espacées sur ladite bague.

## Patentansprüche

1. Axialwälzlager, versehen mit einem Magnetfeld-Meßaufnehmer, der aus einem ersten und einem zweiten Ring (16, 18) besteht, die zwei radiale ringförmige, voneinander getrennte Verlängerungen (30, 32) aufweisen, wobei die Wälzbahnen (33, 35) teilweise auf den radialen Verlängerungen verlaufen und durch die Wälzkörper (34) getrennt sind und ein ringförmiger Magnetfelderzeuger (24) auf der Oberfläche der radialen Verlängerung (30) des ersten Lagerringes (16) angeordnet ist, während der zweite Ring (18) wenigstens einen zylindrischen axialen Rand (36, 38, 64) aufweist, der entlang des Umfangs der radialen ringförmigen Verlängerung (32) des Ringes sowie außerhalb der Ebene des ersten Ringes (16) verläuft; eine Halterung (26) für den Meßaufnehmer (40) wird vom Rand (36, 38, 64) getragen und geführt und ein von dieser Halterung getragener Meßaufnehmer (40) ist axial verschoben und gegenüber dem Magnetfelderzeuger (24) befestigt, der vom ersten Ring getragen wird, wobei der zweite Ring (18) wenigstens eine radiale Lasche (48, 50, 52; 66, 68, 70) trägt, die in die Halterung (26) für den Meßaufnehmer (40) eingreift, um eine Verdrehung der Halterung relativ zum Ring zu verhindern.

2. Wälzlager nach Anspruch 1, dadurch gekennzeichnet, daß die Ränder (36, 38) des zweiten Ringes (18) winkelmäßig getrennt sind und daß die Laschen (48, 50, 52; 66, 68, 70) ungleichmäßig auf diesem Ring verteilt sind.

**Claims**

1. A rolling thrust bearing fitted with a magnetic field sensor which is formed by a first and second ring (16, 18) respectively comprising two annular radial extensions (30, 32) separate from one another, raceways (33, 35) disposed in part on the radial extensions and separated by rolling bodies (34) and an annular magnetic field transmitter (24) mounted on the surface of the radial extension (30) of the first thrust ring (16) and in which the second ring (18) comprises at least one axial cylindrical rim (36, 38; 64) disposed on the periphery of the annular radial extension (32) of this ring and outside the plane of the first ring (18), a support (26) for the sensor (40) borne and guided by the rim (36, 38; 64) and a sensor (40) mounted on the support in an axially offset manner and opposite the magnetic field transmitter (24) supported by the first ring (16), the second ring (18) bearing at least one radial tongue (48, 50, 52; 66, 68, 70) engaged in the support (26) of the sensor (40) to prevent the rotation of this support with respect to the ring.

2. A thrust bearing as claimed in claim 1, characterized in that the rims (36, 38) of the second ring (18) are separated angularly and in that the tongues (48, 50, 52; 66, 68, 70) are unequally spaced on this ring.

FIG. 1

FIG. 2

FIG. 3

FIG. 4

FIG. 6

FIG. 5